Europäisches Patentamt

European Patent Office

Office européen des brevets

(11) Numéro de publication: **0 084 508**

**A1**

(12) **DEMANDE DE BREVET EUROPEEN**

(21) Numéro de dépôt: 83400142.2

(22) Date de dépôt: 20.01.83

(51) Int. Cl.³: **A 63 G 25/00**
**B 62 D 7/02, G 09 F 21/04**

(30) Priorité: 20.01.82 FR 8200799

(43) Date de publication de la demande:
27.07.83 Bulletin 83 30

(84) Etats contractants désignés:
BE CH DE GB IT LI NL

(71) Demandeur: Chabiland, Michel
11 rue Friant
F-75014 Paris(FR)

(72) Inventeur: Chabiland, Michel
11 rue Friant
F-75014 Paris(FR)

(54) Véhicule roulant à grande mobilité.

(57) L'invention concerne la propulsion et le guidage de véhicules principalement electriques demandant une grande mobilité.

Il comprend un bâti (1) reposant sur trois à dix roulettes (5) pivotantes. Il reçoit dans sa partie centrale un châssis (6) animé, d'une part, en translation par une roue (11) et un moteur (10), et d'autre part, en rotation par un autre moteur (12) équipe d'un galet de friction (13) entraînant une couronne (3) solidaire du bâti (1).

Ce vehicule peut être pilote manuellement ou par radio-commande.

Parmi les applications les plus interessantes de l'invention, on peut citer la propulsion d'automates publicitaires, de robots industriels et de vehicules d'attraction foraine.

Fig 1

La présente invention concerne un dispositif de ... ... sion et de guidage pour véhicules principalement ...... demandant une grande mobilité.

Le dispositif connu le plus proche de la pr... ........ ...ion est utilisé sur les véhicules d'attraction ...... dit "auto-tamponneuses".

Les véhicules sont généralement équipés de trois ...... deux roues libres maintenues parallèles à l'arrière du v...... et une roue motrice totalement orientable à l'avant.

Ce système, bien qu'efficace, ne permet pas réellemen... une rotation sur place du véhicule, c'est à dire selon un a... vertical passant par son centre géométrique.

Le dispositif, selon l'invention, permet de remédier avantageusement à cet inconvénient.

Il comporte un bâti circulaire reposant sur trois à dix roulettes pivotantes réparties de façon égale sur son pourtour extérieur.

Dans la partie centrale du dit bâti destiné à procurer une bonne stabilité au véhicule, vient se placer un châssis guidé latéralement en rotation par des roulettes prévues à cet effet.

Le dit châssis repose sur une roue motrice placée en son centre vertical et entraînée par un moteur assurant la propulsion horizontale du véhicule.

Selon une forme de réalisation préférentielle, l'orientation du châssis, donc de la roue motrice, est effectuée à l'aide d'un second moteur muni d'un galet entraînant par friction sur une des couronnes de guidage le châssis en rotation par rapport au bâti.

En effet, la résistance à la rotation est moindre pour le châssis que pour le bâti du fait de ses nombreuses roues placées à sa périphérie. Celles-ci offrent une plus grande résistance au déplacement rotatif que la roue centrale qui elle pivote sur elle-même.

L'effet obtenu est tel que le châssis tourne dans le sens demandé sans que le bâti réagisse en sens inverse, positionnant ainsi, avec une grande précision la roue motrice dans la direction du déplacement désiré.

Selon une variante, utilisable lorsque le véhicule est dirigé manuellement par un conducteur se trouvant à son bord (ex : véhicule d'attraction foraine), la rotation du châssis propulseur peut être assurée à l'aide d'un volant par action directe du conducteur sur celui-ci.

Les dimensions de ce dispositif selon son usage peuvent varier de quelques centimètres pour un jouet par exemple à plusieurs mètres pour un robot industriel. Pour des raisons de stabilité, il est à éviter de manière courante que sa hauteur ne dépasse trois fois son diamètre.

Dans la description qui suit, faite à titre d'exemple, on se réfère aux dessins annexés dans lesquels :

- la figure 1 représente en coupe verticale un dispositif à commande assistée selon l'invention ;

- la figure 2 représente en vue de dessus le même dispositif selon l'invention.

Le bâti est constitué dans cette forme préférentielle de quatre montants verticaux métalliques $1_1$ ; $1_2$ ; $1_3$ et $1_4$ assemblés à distances égales sur la face externe de deux cercles métalliques horizontaux et superposés formant couronne. La couronne supérieure 2 se trouvant sensiblement au sommet du bâti 1 la couronne inférieure 3 très près de sa base.

Chaque montant est coudé sensiblement et avantageusement à l'horizontale vers l'extérieur dans sa partie inférieure, de manière à ce que les axes horizontaux de la partie coudée de chaque montant se croise au centre du bâti en formant entre eux, de préférence, des angles de 90°.

A l'extrémité inférieure et extérieure de chaque montant coudé est fixé un carter 4 sensiblement demi-sphérique dont la partie ouverte est orientée vers le bas.

Chaque carter reçoit une roulette 5 pivotant librement autour d'un axe vertical passant par le centre du carter demi-sphérique et désaxé par rapport à l'axe vertical passant par l'axe horizontale de la roulette.

Les quatre roulettes doivent de préférence être identiques et leur surface de contact avec le sol se trouver dans un même plan.

Il est connu qu'un tel dispositif permet un déplacement dans toutes les directions par auto-adaptation directionnelle des roulettes sous l'effet d'un effort dirigé.

A l'intérieur et au centre du bâti 1 vient se loger un châssis 6 destiné à recevoir les organes moteurs de propulsion et de guidage.

Ce châssis est constitué dans cet exemple de quatre montants verticaux métalliques $6_1$ ; $6_2$ ; $6_3$ et $6_4$ assemblés entre eux par quatre cadres métalliques horizontaux $7_1$ ; $7_2$ $7_3$ et $7_4$. Le dit châssis reçoit sur le cadre $7_1$ deux paliers supportant et permettant la rotation d'un axe 8 muni d'un embrayage à friction 9 entraînant à l'aide d'un moteur électrique reversible à réducteur 10 la roue motrice 11.

Suivant une autre forme de réalisation, le moteur électrique de propulsion peut être intégré au centre de la roue motrice. La bande de roulement est dans ce cas fixé sur le corps du moteur qui tourne avec elle autour de l'induit du moteur fixé sur le châssis et lui servant d'axe de rotation. Ce montage est dit à inducteurs tournants.

La rotation du châssis 6 par rapport au bâti 1 est assurée par un moteur électrique reversible à réducteur 12 équipé d'un galet de friction 13 qui appliqué sur la couronne inférieure 3 par le tendeur réglable 14 provoque lorsqu'il est sollicité l'effet rotatif dans le sens désiré.

Les galets à rotation libre 15 et 16 solidaires respectivement des montants $6_1$ et $6_2$ viennent également s'appliquer sur la couronne 3 de manière à effectuer le centrage de la rotation du châssis 6 dans la partie inférieure du bâti 1.

Le moteur 12 placé entre les montants $6_3$ et $6_4$ est articulé horizontalement sur un axe solidaire des cadres $7_1$ et $7_2$.

Le centrage de la partie supérieure du châssis 6 est réalisé à l'aide de quatre galets à rotation libre 17 solidaires du dit châssis et venant s'appliquer sur la couronne 2.

Sur le cadre $7_2$ repose, dans cette forme préférentielle, la source énergétique 18 composée dans le cas d'un véhicule autonome électrique d'un ou plusieurs accumulateurs électriques. Ces derniers, du fait de leur poids important doivent être placés le plus bas possible de manière à favoriser avantageusement le centre de gravité.

BAD ORIGINAL

Ces derniers, du fait de leur poids important doivent être placés le plus bas possible de manière à favoriser avantageusement le centre de gravité.

La partie supérieure du châssis comprise entre les cadres 7 et 7, abrite commodément les organes de radio-commande, d'asservissement, de signalisation ... ainsi qu'éventuellement le chargeur d'entretien des accumulateurs.

S'agissant d'un automate le châssis peut être coiffé d'une "tête" 20 matérialisée par une demie sphère pouvant supporter des accessoires aussi de stimulation (micro, haut-parleur) et d'animations mécaniques ou électriques (tourniquets, lampes clignotantes, etc.).

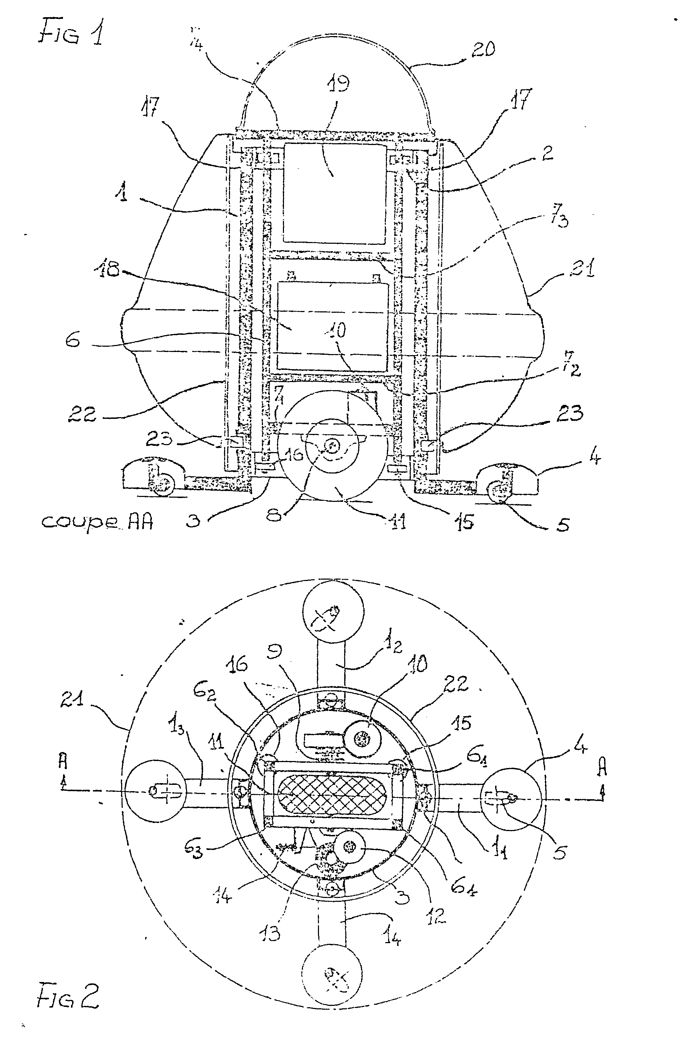

"Le corps" 21 peut revêtir la forme du produit à promouvoir. Il est solidaire d'un tube cylindrique 22 venant se centrer sur quatre galets 23. Selon la figure 1 la "tête" est indépendante du "corps" mais rendue solidaire de ce dernier, elle peut tourner avec lui.

Ce dispositif selon l'invention est particulièrement destiné à l'animation publicitaire sur les lieux de vente.

- 6 -

REVENDICATIONS

1. Véhicule roulant à grande mobilité comportant un chassis destiné à recevoir les organes de propulsion et de guidage, pivotant selon un axe vertical, à l'intérieur d'un bâti circulaire, caractérisé en ce que le bâti circulaire (1) repose sur le sol par l'intermédiaire de moyens tels que roulettes (5) montées sur le bâti de façon à lui permettre un déplacement omni-directionnel sous l'effet d'un effort dirigé.

2. Véhicule suivant la revendication 1, caractérisé en ce que le bâti (1) est constitué par une pluralité de montants verticaux ($1_1$, $1_2$, $1_3$, $1_4$) entretoisés haut et bas par des éléments horizontaux formant couronnes (2, 3) sur lesquelles roulent des galets (15, 16, 17) solidaires du chassis (6) en vue du centrage en rotation du chassis (6) dans le bâti (1).

3. Véhicule suivant l'une quelconque des revendications précédentes, caractérisé en ce que chaque montant ($1_1$, $1_2$, $1_3$, $1_4$) du bâti (1) est, dans sa partie inférieure, coudé à l'horizontale à l'extérieur de manière à ce que les axes horizontaux de la partie coudée de chaque montant se croisent au centre du bâti en formant entre eux,des angles de préférence de 90°.

4. Véhicule suivant l'une quelconque des revendications précédentes, caractérisé en ce que, à l'extrémité inférieure et extérieure de chaque montant coudé est fixé un carter (4) recevant une roulette (5) ou l'équivalent, pivotant librement autour d'un axe vertical passant par le centre du carter et désaxé par rapport à l'axe vertical passant par l'axe horizontal de la roulette.

5. Véhicule suivant l'une quelconque des revendications précédentes, caractérisé en ce que le chassis (6) est constitué par une pluralité d'éléments verticaux ($6_1$, $6_2$, $6_3$, $6_4$) assemblés entre eux par une pluralité d'éléments horizontaux formant des cadres superposés ($7_1$, $7_2$, $7_3$, $7_4$) servant de supports aux organes de propulsion et de guidage, à la source énergétique d'alimentation de ces organes, aux

BAD ORIGINAL

organes de radio-commande et d'asservissement et, eventuellement, de sonorisation dont peut être muni le véhicule.

6. Véhicule suivant l'une quelconque des revendications précédentes, caractérisé en ce que les moyens de propulsion consistent en une roue motrice (11) entraînée par un moteur reversible à réducteur (10) par l'intermédiaire d'un embrayage à friction (9), le moteur de propulsion étant intégré au centre de la roue motrice (11).

7. Véhicule suivant l'une quelconque des revendications précédentes, caractérisé en ce que la rotation du chassis (6) est assurée par un moteur (12) équipé d'un galet (13) prenant appui par friction sur la couronne (3).

8. Véhicule suivant l'une quelconque des revendications précédentes, caractérisé en ce que le chassis (6) supporte une "tête" (20) équipée d'éléments d'animation.

9. Véhicule suivant l'une quelconque des revendications précédentes, caractérisé en ce qu'il est revêtu d'un "corps" personnalisé (21) solidaire du bâti (1).

10. Véhicule suivant l'une quelconque des revendications précédentes, caractérisé en ce qu'il est revêtu d'un "corps" personnalisé (21) solidaire du chassis (6).

FIG 1

coupe AA

FIG 2

| | DOCUMENTS CONSIDERES COMME PERTINENTS | | Page   2 |
|---|---|---|---|

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A- 694 154 (BROUSSUT) *Page 3, lignes 1-65 et lignes 96-104; page 4, lignes 1-29; fig- ures 4,5,7-9* | 1,2,5 | |
| | --- | | |
| A | GB-A- 654 438 (SMITH) *Page 2, lignes 28-51,81-92; page 3, lignes 35-72; figures 1,3,8* | 5,8,9 | |
| | --- | | |
| A | FR-A-1 041 300 (GAY) *Page 1, colonne de gauche, pre- mier alinéa; revendications 1,7; figures 1-4,7-9* | 5,8 | |
| | --- | | |
| A | FR-A- 938 123 (CHRISTOU) *Page 1, lignes 21-48; figure 1* | 8,9 | |
| | ----- | | DOMAINES TECHNIQUES RECHERCHES (Int. Cl. 3) |

Le présent rapport de recherche a été établi pour toutes les revendications

| Lieu de la recherche LA HAYE | Date d'achèvement de la recherche 04-03-1983 | Examinateur MAROSCIA A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OE B Form 1503 03 82

**Office européen des brevets**

## RAPPORT DE RECHERCHE EUROPEENNE

Numéro de la demande

EP  83 40 0142

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 131 523 (HOLZDORFER) *Page 1, lignes 18-32; page 2, lignes 2-22, lignes 33-39; page 3, lignes 1-28; figures 1-4* | 1 | A 63 G  25/00 B 62 D   7/02 G 09 F  21/04 |
| Y | | 2 | |
| | --- | | |
| X | FR-A- 533 341 (STOEHRER) *Page 1, lignes 71-83; page 3, lignes 60-78; figures 2-5; page 3, lignes 79-104; page 4, lignes 1-18; figures 6,7* | 1 | |
| Y | | 6 | |
| | --- | | |
| A | US-A-3 700 058 (KUWAHARA) *Colonne 1, lignes 28-32 et lignes 42-64; figures 1,3; colonne 1, lignes 33-41 et lignes 65-68; figure 2* | 1,3,4 6 | |
| Y | | 2 | |
| | --- | | |
| Y | FR-A-1 092 621 (CARRA) *Page 2, colonne de gauche, lignes 3-57; colonne de droite, en entier; page 3, colonne de gauche, lignes 1-8; figures 1,2* | 6 | |
| | ---          -/- | | |

DOMAINES TECHNIQUES RECHERCHES (Int. Cl. ³)

A 63 G
B 62 D
G 09 F
B 60 R

Le présent rapport de recherche a été établi pour toutes les revendications

| Lieu de la recherche LA HAYE | Date d'achèvement de la recherche 04-03-1983 | Examinateur MAROSCIA A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant